# EUROPEAN PATENT APPLICATION

(11) **EP 4 124 896 A1**
(43) Date of publication of application: **01.02.2023**
(21) Application number: 21187725.3
(22) Date of filing: 26.07.2021
(51) Int. Cl.: G02B 7/02

(54) **SELF-CENTERING LENS ENCLOSURE AND OBJECTIVE FOR A METROLOGICAL CAMERA**

(71) Applicant: Hexagon Technology Center GmbH, 9435 Heerbrugg (CH)
(72) Inventor: ZÜLLIG, Jan, 9315 Neukirch (CH); SCHEJA, Jochen, 6845 Hohenems (AT); BRÜHLMANN, Danick, 9422 Staad (CH); LAIS, Josef, 9437 Marbach (CH)
(74) Representative: Kaminski Harmann

(57) **Abstract**

A lens enclosure and objective for a metrological camera, the lens enclosure comprising a first support area for support of the first optical element and a second support area for support of the second optical element, spaced apart from each other. The first and second support area are shaped as a segment of a surface of at least one right cone each such that the support of the first and second optical element each is self-centering with respect to translation in all directions as well as tilt in relation to the optical axis.

## Description

The present invention relates to lens enclosure according to claim 1 and objective according to claim 7 for a metrological camera according to claim 15 with self-centering enclosure of optical elements.

In metrology it is a general object to determine geometrical properties such as coordinates, distances, and orientations of one or more target objects by a measuring device, wherein in most instances those properties have to be determined with respect to a known reference system, e.g. defined by one or more known reference points. Methods and systems for measuring target coordinates are used in many applications, e.g. very precise measurements in geodesic applications, measurement problems in the field of building installation, or for controlling industrial processes. Measurement and analysis instruments using machine vision or light-based technology are widely used in quality assurance for parts and assemblies of machines, medical devices, and semiconductor products, etc. For example, industries often use optical metrology equipment to provide non-contact evaluation of workpieces or substrates during processing. With optical metrology, a sample under test is illuminated with light, e.g. simply by ambient light or by a dedicated light source with a single wavelength or multiple wavelengths. After interacting with the sample, resulting light is collected through an objective and detected/imaged by an image sensor and the resulting measuring image is analyzed to determine a desired characteristic of the sample. Often, in order to improve process control for manufacturing processes, optical metrology and inspection systems are used to measure and quickly provide feedback for real-time control of the processes (in-situ or online measurement).

For this purpose images can be used taken by a measuring camera for instance integrated in a measuring machine such as a CMM, e.g. an image based 3D measuring machine, also called vision measuring machine, for acquisition of small scale 3D information, e.g. in order to measure the dimensions of workpieces in purpose of quality control, wherein small scale means a range of millimetre, micrometer, nanometer. Images acquired by a metrological camera are precisely located in three dimensions (3D) and the features of the workpiece can also then precisely be located in the image itself, given that a correct calibration process of the camera has been done before. This calibration ensures that there is a known relation between a pixel of the taken image and the real world's size and that lens distortion is properly compensated.

A camera, as understood here, comprises: an objective, an objective holder with a reception opening into which the objective is inserted, an image sensor - also referred to as camera chip -, wherein image sensor and objective are arranged relative to one another, or may be arranged relative to one another, in such a way that an image is imageable on the image sensor in focus. Amongst others, the following may be used as a camera or camera chip: a CMOS, a CCD, a range imaging camera (depth measurement with time of flight), a photodiode array, focal plane arrays, a thermocam, multispectral sensors. The image sensor is contacted in an electrically conductive manner, e.g. using a printed circuit board, also referred to as circuit board or PCB, such that the electrical signals which are produced by incident light in the image sensor are forwarded onto the printed circuit board. The electrical signals may then be processed by evaluation electronics which are for instance situated on the printed circuit board or which constitute a unit electrically connected thereto or a unit which is connected by means of other signal transferring devices.

Further, the term objective is used here within the meaning of this being understood as one or more objective lenses, or else a hollow body which, as a rule, is embodied as a tube in which objective lenses are arranged. Here, focusing may be carried out by repositioning the lenses or by twisting or displacing the tube, with the lenses situated therein, in the objective holder. Depending on requirements, one or more spectral filters or apertures may also be provided in the optical path of the camera system, i.e., for example, attached in the tube or on the camera chip. The camera system may be designed to image wavelengths in the visible range, but also in the near and far infrared wavelength range.

Metrological camera systems of the type described above are often constituents of relatively high-quality photo cameras and then, as a rule, also have a variable focus. In a simple embodiment of such a camera system, a focusing device ensures focus. Here, the objective thread is actuated in a motor-driven manner, rendering it possible to variably set the distance between the image sensor and the objective correspondingly as described above by twisting the objective in the objective holder, such that a sharp image can be produced on the image sensor over a broad range. The demands on camera systems, which are used in such photo cameras, in respect of the ability to calibrate or in respect of accuracies or tolerable aberrations which, for example, may also emerge from tremors or temperature variations, may, as a rule, be satisfied well using the currently available structures and technical components. However, if this relates to highest precision of image capture, such focusing devices often act as sources of errors on account of their many parts that are movable in relation to one another.

A further source of error in precision applications can lie in different coefficients of thermal expansion within the objective, in particular the objective lenses on the one hand and the tube carrying the lenses on the other hand, but also between the objective and objective holder. As a rule, the objective lenses are manufactured from glass and therefore have a comparatively small coefficient of thermal expansion a_{Gl} in the region of a_{Gl} = 0.5*10⁻⁶K⁻¹ to 9*10⁻⁶K⁻¹. By contrast, the tube or objective holder are often manufactured from aluminum or an aluminum alloy, and so the coefficient of thermal expansion a_{Ob} thereof lies in the region of a_{Ob} = 22*10⁻⁶K⁻¹ to 24*10⁻⁶K⁻¹.

In short, objectives for optical metrology have very high demands on tolerance. Thus, an enclosure or mount of optical elements, in particular lenses, is very demanding, with respect to manufacturing as well as regarding long-term stability/precision. This is true in particular in case of application in conditions with high temperature variations or mechanical influences such as shocks or vibrations which is for example often the case in industrial in-line inspection systems or in outdoor devices for precise metrological measurements such as geodetic appliances. Metrological objectives known in the art either lack in precision. Or they need complex mounting structures and/or elaborate manufacturing, in particular with respect to mounting or alignment of optical elements of the objective, the relative small size/diameter of which, often in the millimeter range, make things even more difficult.

Thus, it is an object of the present invention to provide a lens enclosure and objective which enable a precise enclosure of an assembly of optical elements.

This object are achieved by realising the features of the independent claims. Features which further develop the invention in an alternative or advantageous manner are described in the dependent patent claims.

The present invention relates to a lens enclosure for enclosure of at least a glass lens -as a first optical element- and of a second optical element of a metrological camera. The lens enclosure comprises a first support area for support of the first optical element and a second support area for support of the second optical element, wherein the first and second support area are spaced apart from each other in direction of the optical axis of the lens enclosure.

The enclosing first and second support area are shaped as a segment or section of a surface of at least one right cone (conical envelope) each, the central axis of which is coaxial to or extends along the optical axis, having optionally a maximum diameter of 30mm or 14mm at most (maximum diameter means the diameter at the widest opening of the support area, which is as said narrowing in direction of the optical axis) . The support of the first and second optical element each is self-centering with respect to translation in all directions as well as tilt in relation to the optical axis.

That is, there is a mounting assembly for spaced mounting of at least two optical elements (in spaced succession along the optical axis), one of the elements being a glass lens, whereby the stops for the elements have inclined, tapered contact surfaces with self-centering reception properties. Hence, the optical axes of the optical elements are self-aligned with respect to the optical axis of the lens enclosure respectively mutually. The at least two centering surfaces lie on an imaginary conical surface with an angle of inclination towards the optical axis being half the cone's draft angle, the draft angle being optionally between 60° and 120° or 70° and 110°. These value range is advantageous regarding self-centering and an optional non-self-locking support of a respective optical element. Preferably, the draft or inclination angle of the first support area is equal to the one of the second support area.

As another option, the enclosure of a respective optical element is locally defined, for example virtually linear (in case of a support area either in form of a complete, closed circle as section of the cone envelope or of multiple spaced sections of such a circle) or punctiform (in case of distinct support points as spaced points on a circle).

Optionally, at least the first and second support area or alternatively the lens enclosure as a whole are made from metal, in particular anodized aluminum, glass and/or ceramics. As another option, the first and second support area are arranged in such a way that they are accessible for a turning tool of a turning machine in one and the same clamping.

The present invention also relates to an imaging objective for a metrological camera, preferably having a length between 5mm and 30mm. The objective comprises at least a first lens enclosure and a first optical element embodied as a glass lens and at least a second optical element, e.g. another lens, an aperture, filter or DOE. The first lens enclosure comprises a first support area for support of the first optical element and a second support area for support of the second optical element, whereby the first and second support area are spaced apart from each other in direction of the optical axis of the objective (hence, the lens enclosure serves as a lens spacer). The lens enclosure can be embodied as at least one unit or module separate from a (main) body of the objective or as an integral part of the objective's body.

A respective support area and/or a respective contact area of the first or second optical element for contacting the respective support area is shaped as a segment of a surface of at least one right cone each, the central axis of which extends along the optical axis, such that the support of the first and second optical element each is self-centering with respect to translation in all directions as well as tilt in relation to the optical axis.

This design allows for instance to center the optical element in the respective support area by activating the lens spacer, for example by ultrasound. There is no need to center or align it by targeted positioning with some positioning means but the optical element moves "automatically" to a centered position.

Preferably, the optical axis of a respective optical element is aligned coaxially to the optical axis of the objective solely due to the self-centering support. That is, advantageously no other means or procedure is needed for the optimal, coaxial alignment of the glass lens and further optical elements.

As another preferred option, the lens enclosure itself is supported self-centered due to the lens enclosure having an outer support area shaped as a segment of a surface of another right circular cone, wherein the central axes of the at least one inner cone and the outer cone are coaxial. That is, the lens enclosure provides in the inner support areas for the optical elements shaped according to one or more inner cones and has itself on its outer areas for support of the lens enclosure by the objective/barrel shaped according to at least one outer cone. Hence, not only the optical elements are self-centering but the lens enclosure is supported self-centered, too. Therewith, all components of importance for the optical path can be "automatically" perfectly aligned to the optical axis of the objective or image sensor of the camera.

In preferred embodiments, the objective comprises fixation means for fixation of the lens enclosure or the optical elements. Optionally, the fixation means are adapted in such a way that a respective fixation of the lens enclosure or optical element is free of play. As another option, at least one of the respective fixation means is embodied as a single element i.e. only one part per (optical) element to be secured or pressed onto the points of support. Optionally, the first and second optical element are preloaded by a force which is at least a hundred times the weight (gravitational force) of a respective optical element, whereby preferably the force is maximal 100N. The force can be applied from only one side or from two sides.

As an option, the surface of a respective support area and/or contact area is coated with a hardened, e.g. anodizing, and/or low-friction coating. As another option, the objective comprises materials with different coefficients of thermal expansion, particularly regarding the coefficient of thermal expansion of the lens enclosure which is different to the coefficient of thermal expansion of the first and/or second optical element.

The present invention also relates to a metrological camera, having an objective imaging objective comprising at least a first lens enclosure and a first optical element embodied as a glass lens and at least a second optical element. The first lens enclosure comprises a first support area for support of the first optical element and a second support area for support of the second optical element, whereby the first and second support area are spaced apart from each other in direction of the optical axis of the objective. A respective support area and/or a respective contact area of the first or second optical element for contacting the respective support area is shaped as a segment of a surface of at least one right cone each, the central axis of which extends along the optical axis, such that the support of the first and second optical element each is self-centering with respect to translation in all directions as well as tilt in relation to the optical axis.

The lens enclosure and objective according to the invention and the method according to the invention will be described in greater detail hereinafter, purely by way of example, with reference to exemplary embodiments depicted schematically in the drawings.

More specifically, in the drawing
- Figs.1: shows a schematical 3D-view of an exemplary embodiment of a lens enclosure for mounting of at least two optical elements, therein at least one glass lens,
- Fig.2: schematically shows an exemplary objective for a metrological camera in a cross sectional view, and
- Fig.3a,b: schematically depict a cross-sectional view of a part of an objective.

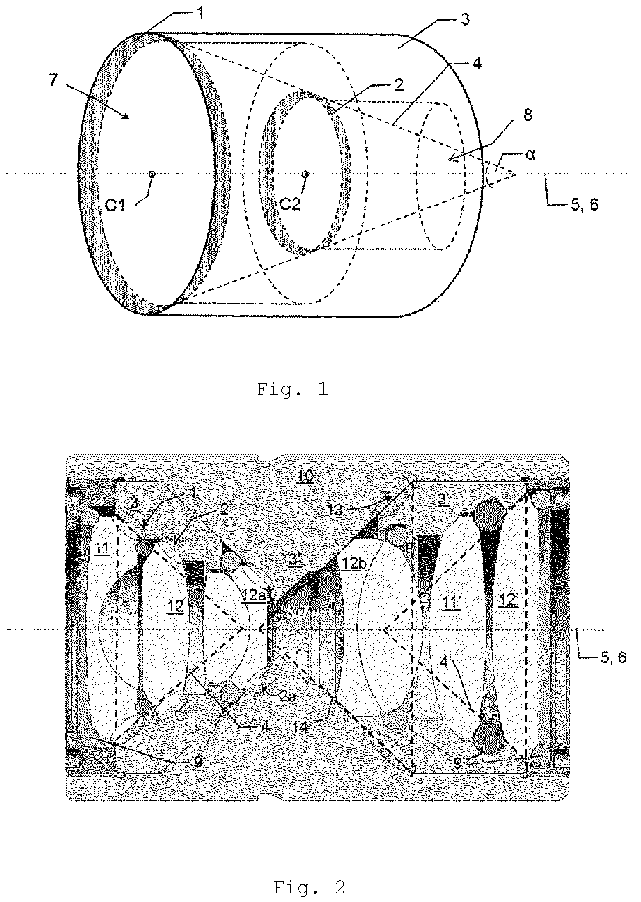

Fig. 1 shows a 3D-view of an exemplary embodiment of a lens enclosure 3 for a metrological camera. Such a metrological camera is for example part of an industrial or geodetic metrology system such as a vision inspection system, 3D scanner, photogrammetric systems, machine vision apparatus, 3D-microscope or surveying system.

In the example, the lens enclosure is formed as a barrel with a circular entry area 7 and a circular exit area 8 with a smaller diameter than the entry area 7. The lens enclosure 3 comprises two support areas 1, 2 (marked grey in the figure), namely a first support area 1, in the example situated at the front, and a second support area 2, in the example situated in a middle section of the barrel. In the example, the second support area 2 is smaller than the first support area 1, however, they can also be both of same size or diameter or the second one can be greater than the first one. Preferably, the maximum diameter of a support area 1, 2 is 30 millimeter at most, in particular 14mm at most.

The support areas 1, 2 are designed for support of an optical element each, whereby at least one of the optical elements is a glass lens. The optical axis 5 of the lens enclosure is defined by the midpoints C1, C2 of the support areas 1, 2, in the example the center of the circle or ring which can be inscribed in a respective support area 1, 2. In the example, the optical axis 5 is identical or coaxial to the central axis of the cylinder defined by the barrel 3, in particular within a tolerance of 20 or 10 micrometers. The two support areas 1, 2 are spaced apart from each other in direction of the optical axis 5.

A respective support area 1, 2 are each lying on the surface of an "imaginary" right cone 4. In the example, the two areas 1, 2 are part of one and the same cone 4, however, each support area 1, 2 can be a segment of a separate or different cone envelope, whereby the central axis 6 of each cone is coaxial to the optical axis (the apex and center of the cone's bottom surface are lying on the optical axis 5). In any case, each support area 1, 2 is narrowing along the optical axis 5 in the sense that the diameter of the enclosed area decreases in direction of the optical axis 5.

Each support area 1, 2 has a uniform angle of inclination towards the optical axis 5 which is half the draft angle α of the cone 4. Preferably, the draft angle α or angle of inclination is the same for both support areas 1, 2; however, the respective angles of different support areas 1, 2 can be different, too. Preferably, the draft angle is between 60° and 120°, most preferably between 70° and 110°, meaning that the inclination angle is between 30° and 60° resp. 35° and 55°. A most preferred inclination angle is 45°.

Such an inclination angle is particularly advantageous for self-centering support of a respective optical element which is enabled by the tapered support areas 1, 2 of the lens enclosure 3. The particular, conical shape of the receiving sections 1, 2 allow for an enclosing support of an optical element, in particular a glass lens, which is locally defined or limited. The present lens mount 3 provides advantageously self-centering stops for of at least two optical elements with respect to translation in all directions as well as tilt (yaw and pitch) in relation to the optical axis 5.

When an optical element (lens, filter, aperture etc.) is inserted into the lens enclosure 3, it is centered "by itself", e.g. using gravitational force and activation by vibration, in particular ultrasound, without the need of active or "external" positioning or aligning of the optical element as is the case in lens enclosures known in the art. Proper alignment of the optical elements with respect to the optical axis (and with respect to each other) is "automatically" achieved, without need of force application or additional spacing components or the like. As the support of a respective optical element is non-self-locking, it cannot become locked, even in case of dimensional change e.g. induced by temperature changes.

The lens assembly 3 can be a single piece as indicated in the figure, however, it can also be an assembly of multiple modules or segments. For instance, a first piece or first lens spacer comprising the first stop 1 is mounted in succession to a separate second piece or second lens spacer comprising the second stop 2 in a common frame/housing/objective (barrel). An objective in turn can comprise multiple lens enclosures 3.

In particular in case of a single piece-lens enclosure 3, the geometry is chosen such that first and second support area 1, 2 are accessible for a turning tool of a turning machine in one and the same clamping as is the case in the example shown which face the same direction (to the front) and whereby the inner support area 2 is smaller in diameter than the outer support area 1. In other words, both (all) stops are arranged in such a way that they can be produced in one manufacturing step.

However, a respective support area 1, 2 needs not to be shaped like a complete, closed or continuous (narrowing) ring as shown in the figure but can be a, preferably axially symmetrical, arrangement of discrete or separate points or sections spaced from another distributed on a segment of a cone surface around the central axis 6. Said otherwise, the support area 1, 2 is not necessarily a continuous 360°-section or strip of a cone envelope but can also be a number of points or sections lying on such a cone envelope line or strip, preferably with equal distance to each other.

Preferably, the lens enclosure 3 is made from metal, preferably anodized aluminum, glass and/or ceramics. Or at least the support areas 1, 2 are made therefrom; e.g. in case of a modular lens enclosure 3 as described above, the lens enclosure 3 can be a combination of different materials. These materials combine endurance with low friction or seen the other way round comparatively high sliding properties, which is advantageous for the self-centering.

Fig. 2 shows an exemplary objective 10 for a metrological camera in a cross sectional view (with the optical axis 5 lying in the image layer, i.e. a section along the optical axis 5). A preferred size of such an imaging measuring objective 10 is between 5mm and 30mm. Thereby, the form factor of the objective 10 is comparatively small due to the combined arrangement of several stops in one lens enclosure as shown in Fig.1 or Fig. 2.

In the example, the objective 10 comprises a first lens enclosure 3, a second lens enclosure 3' and a third lens enclosure 3" with conical support areas, each lens enclosure 3, 3', 3" enclosing multiple optical elements 11-12' such as lenses, filters, aperture, diffractive optical elements (DOE). At least one of the optical parts is glass lens; plastic lenses in general do not fulfill the high demands of a metrological camera for industrial and/or geodetic measuring according to the invention. Besides the conically enclosed optical elements, the measuring objective 10 may comprise additional optical elements with conventional enclosure/mount.

For mounting of the optical elements 11-12', each lens enclosure 3, 3' comprises multiple enclosing stops, wherein for better clearance only three of them are indicated in the figure (numbered 1, 2, 2a, inside the dotted frame). As can be seen, the first and second lens enclosures 3, 3' are embodied as separate pieces, inserted in the objective's housing, whereas the third lens enclosure 3'', supporting optical elements 12a, 12b is an integral part of the housing or objective 10. That is, for instance support area 2a, supporting the optics 12a, is part of or in direct contact to the objective's main body.

As in principle described with respect to figure 1, the support areas 1, 2, 2a provided by the lens enclosures 3, 3', 3" are narrowing along the optical axis 5 according to the surface or envelope of a cone each. Two of these virtual cones 4, 4' are indicated in the figure (cone 4 for the first enclosure 3, cone 4' for the second enclosure 3'). Each cone 4, 4' is a right cone with its central axis lying on the optical axis of the objective 10, whereby in the example, the cones 4 of the first lens spacer 3 are oriented opposite to the cones 4' of the second lens spacer 3'.

Due to the design with tapered support areas 1, 2, 2a, the optical axis of respective optical element 11, 12, 12a, 11', 12' is aligned coaxially to the optical axis 5 of the objective 10 solely due to the provided self-centering support. That is, there is a self-centering of a respective optical element 1, 2, 2a such as a glass lens regarding shift (translation with respect to the optical axis 5) as well as tilt (inclination with respect the optical axis 5). Thus, the optical elements 1, 2, 2a are auto-aligned.

In the example, the objective 10 comprises fixation means 9 such as flexures, o-rings or spring elements with which a respective optical element 1, 2, 2a is fixed in its self-centered position/alignment. As shown, a fixation means 9 thereby is preferably embodied as a single, e.g. ring-shaped, element. Each optical element 1, 2, 2a may be fixed by its own fixation means 9 as shown or alternatively a fixation means 9 may fix more than one optiacal element 1, 2, 2a.

As another option, the fixation is free of play with direction of the optical axis and/or exactly adapted to the optical element/support area in such a way that a respective optical element is pressed onto the points of support in such a way that a lifting of the optical element 11-12' is prevented, even in case of geometrical fluctuations or instabilities e.g. because of temperature change.

For instance, the fixation means 9 preloads a respective optical element 11-12' with a force which is at least a hundred times the weight (gravitational force) of the respective optical element, typically in the range of 10N-20N, thereby preferably not exceeding a maximal force of 100N. As another option, the preload is lower than the maximum force occurring by temperature change induced deformation, e.g. dilation, of a respective optical element 11-12' and/or a respective lens spacer 3-3", thus avoiding any stress caused by different length/dimensional changes due to different CTEs of optical elements and lens enclosure/objective.

In the example, the two separate lens enclosures 3, 3' are themselves supported self-centered by the objective 10. Here, they have an outer support area -one of which is marked in the figure by the dotted enclosing mark with reference number 13- which is narrowing along the optical axis 5, too. As indicated in the figure with exemplary "imaginary" cone 14, there are in addition to the inner cones 4, 4' describing the support areas 1, 2, 2a for the optical elements outer cones 14 describing the support areas 13 for support of the lens enclosures 3, 3' themselves.

Like the inner cones 4, 4', the central axis of an outer cone 14 is coaxial to the optical axis 5 of the objective 10. Seen otherwise, the central axes of inner cones 4, 4' and outer cones 14 are identical (however, their draft angles as well as the position of their apex and length can be different). Hence, the embodiment shown in Fig. 2 can be denoted or described as double-conical, providing a two-fold self-centering objective assembly, having a concentric (concentric at least within a tolerance of maximal 20µm or in particular maximal 10 µm) inner and outer support area. Such an arrangement can be further extended e.g. by stacking multiple of such self-centering lens enclosures into each other.

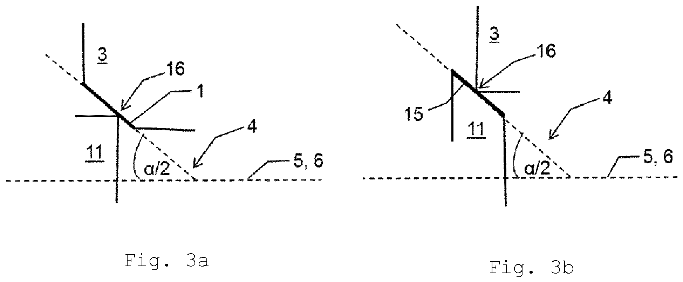

Figs. 3a, 3b show a cross-sectional view (with the optical axis 5 lying in the image layer) of a section of an objective for a metrological camera wherein only part of the lens enclosure 3 and of an optical element 11 is depicted.

Fig. 3a illustrates an arrangement as in principle described above. The support area 1 is narrowing along the optical axis 5, following the surface of a cone 4 with the cone's axis 6 being identical to the optical axis 5. Hence, there are points of support provided which -in the plain comprising the optical axis 5- are inclined towards the optical axis with an inclination angle being half the cone's draft angle α.

The counterpart, the optical element 11 in the example has a rectangular edge or contact area facing the support area 1. The resulting geometry between the lens enclosure 3 and the optical element 11 resp. between the support area 1 and the element's contact area provides a locally defined, in the example namely virtually punctiform or linear enclosure 16 of the optical element 11.

In the embodiment according to fig. 3b, the arrangement is so to say the other way round. In this example, the lens enclosure 3 shows an edge whereas the contact area 15 of the optical element 11 is tapered. That is, the outer, circular surface of e.g. the glass lens 11 is -in parallel to the optical axis 5- shaped according to a cone 4, the cone's axis 6 again being identical to the optical axis 5. Hence, in this case, it is the optical element 11 where the area 15 to be supported is conically shaped.

Spoken generally, at least one side, either the support area 1 or the contact area 15, shows a cone (segment) 4. The other side facing the conical side needs not to be shaped conically but can have a different geometry. For instance, the side or area facing the conical side can be designed as a straight ring or three or more circumferential points of support.

Thus, in all cases the zone of contact between optical element 11 and lens enclosure 3 is reduced to limited area or even minimized to virtually a line (circle) or circumferential succession of points. Such a small or even minimal contact zone is particularly advantageous for self-centering support.

Optionally, there is an intermediate medium such as a coating, lubricant or bearing means in between lens enclosure 3 and optical element 11 whereby the medium is adapted in such a way that it does not disrupt or disturb the conical shape/geometry as such. An advantageous medium is for example hardening a respective contact area and/or makes the surface more flat/even/polished, therewith supporting self-centering. A roughness as low as 1.6pm or 0.8pm (Ra) or better of the contact or support surfaces, either with or without coating, is desirable.

Although the invention is illustrated above, partly with reference to some preferred embodiments, it must be understood that numerous modifications and combinations of different features of the embodiments can be made. All of these modifications lie within the scope of the appended claims.

## Claims

1. Lens enclosure for enclosure of at least a glass lens - as a first optical element- and of a second optical element of a metrological camera, the lens enclosure comprising
• a first support area for support of the first optical element and
• a second support area for support of the second optical element,
wherein the first and second support area are spaced apart from each other in direction of the optical axis of the lens enclosure,
**characterized in that**
the first and second support area are shaped as a segment of a surface of at least one right cone each, referred to as inner cone, the central axis of which is coaxial to/extends along the optical axis, such that the support of the first and second optical element each is self-centering with respect to translation in all directions as well as tilt in relation to the optical axis.

2. Lens enclosure according to any one claim 1, **characterized in that**
the support of a respective optical element is non-self-locking.

3. Lens enclosure according to claim 1 or 2,
**characterized in that**
the enclosure of a respective optical element is locally defined, in particular virtually punctiform or linear.

4. Lens enclosure according to any one of the preceding claims,
**characterized in that**
the draft angle of a respective support area is between 60° and 120°, in particular between 70° and 110°.

5. Lens enclosure according to any one of the preceding claims,
**characterized in that**
the maximum diameter of the respective support area is 30mm at most, in particular 14mm at most.

6. Lens enclosure according to any one of the preceding claims,
**characterized in that**
the first and second support area are arranged in such a way that they are accessible for a turning tool of a turning machine in one and the same clamping.

7. Imaging objective for a metrological camera, comprising a first lens enclosure and a first optical element embodied as a glass lens and at least a second optical element, wherein
• the lens enclosure comprises a first support area for support of the first optical element and a second support area for support of the second optical element,
• the first and second support area are spaced apart from each other in direction of the optical axis of the objective,
**characterized in that**
a respective support area and/or a respective contact area of the first or second optical element for contacting the respective support area is shaped as a segment of a surface of at least one right cone each, referred to as inner cone, the central axis of which extends along the optical axis, such that the support of the first and second optical element each is self-centering with respect to translation in all directions as well as tilt in relation to the optical axis.

8. Objective according to claim 7,
**characterized in that**
the optical axis of a respective optical element is aligned coaxially to the optical axis of the objective solely due to the self-centering support.

9. Objective according to one of claims 7 or 8, **characterized in that**
the lens enclosure is supported self-centered due to the lens enclosure having an outer support area shaped as a segment of a surface of another right cone, referred to as outer cone, wherein the central axes of the at least one inner cone and the outer cone are coaxial.

10. Objective according to any one of claims 7 to 9, **characterized in that**
the objective comprises fixation means for fixation of the lens enclosure and/or the optical elements, whereby
• a respective fixation is free of play in direction of the optical axis and/or
• at least one of the fixation means serves for fixation of at least two optical elements.

11. Objective according to any one of claims 7 to 10, **characterized in that**
the first and second optical element are preloaded, in particular by a spring element, by a force which is at least a hundred times the weight of a respective optical element, in particular whereby the force is maximal 100N.

12. Objective according to any one of claims 7 to 11, **characterized in that**
the surface of a respective support area and/or contact area is coated with a hardened and/or low-friction coating.

13. Objective according to any one of claims 7 to 12, **characterized in that**
the length of the objective is between 4mm and 40mm, in particular 5mm and 30mm, more particular 10mm and 25mm

14. Objective according to any one of claims 7 to 13, **characterized in that**
the objective comprises materials with different coefficients of thermal expansion, wherein at least the coefficients of thermal expansion of the lens enclosure and first and second optical element are different to each other.

15. Metrological camera for industrial and/or geodetic measuring,
**characterized by**
an objective according to claim 7.
